# EUROPÄISCHE PATENTSCHRIFT

(11) **EP 4 011 805 B1**
(45) Veröffentlichungstag und Bekanntmachung des Hinweises auf die Patenterteilung: **15.11.2023**
(21) Anmeldenummer: 20212641.3
(22) Anmeldetag: 09.12.2020
(51) Int. Cl.: B65G 1/04, B65G 47/90

(54) **GREIFER UND TRANSPORTSYSTEM FÜR EINE KOMMISSONIERVORRICHTUNG**
GRIPPER AND TRANSPORT SYSTEM FOR A PICKING DEVICE
PRÉHENSEUR ET SYSTÈME DE TRANSPORT POUR UN DISPOSITIF DE PRÉPARATION DE COMMANDES

(43) Veröffentlichungstag der Anmeldung: 15.06.2022
(73) Patentinhaber: Becton Dickinson Rowa Germany GmbH, 53539 Kelberg (DE)
(72) Erfinder: GROSS, Dietmar, 53539 Kelberg (DE); BROKONIER, Stephan, 54570 Neroth (DE); MARTINI, Heinrich Paul, 56761 Brachtendorf (DE)
(74) Vertreter: Zenz Patentanwälte Partnerschaft mbB

(56) Entgegenhaltungen:
- EP-A1- 1 285 866
- EP-A1- 2 163 507
- WO-A1-2019/015815
- DD-A1- 226 826
- DE-A1- 3 513 893
- DE-A1- 3 705 884
- DE-A1-102009 025 910
- DE-A1-102011 010 557
- GB-A- 2 130 550
- US-A- 4 543 032
- US-A1- 2017 066 141

## Beschreibung

Die vorliegende Erfindung betrifft einen Greifer für ein Transportsystem einer Kommissioniervorrichtung mit horizontalen Lagerflächen zum Ein- und Auslagern von Kleinstückgütern unterschiedlicher Form und/oder Oberflächenbeschaffenheit, und ein Transportsystem mit dem Greifer.

Bei modernen Kommissioniervorrichtungen wird eine große Anzahl unterschiedlicher Arten von Kleinstückgütern chaotisch und platzoptimiert auf langgestreckten horizontalen Lagerflächen gelagert. Diese Lagerflächen werden von einer Mehrzahl von Regalböden bereitgestellt, wobei pro Regalboden eine Vielzahl von Kleinstückgütern gelagert wird. Bei einer chaotischen platzoptimierten Lagerung werden Kleinstückgüter, beispielsweise Arzneimittelpackungen und Nahrungsergänzungsmittelpackungen, bei Kommissioniervorrichtungen, die in Apotheken oder Krankenhäusern verwendet werden, derart auf Lagerflächen gelagert, dass eine möglichst große Anzahl von Kleinstückgütern pro Flächeneinheit einer Lagerfläche gelagert werden kann. Bei der chaotischen platzoptimierten Lagerung ist es eher ungewöhnlich, dass Kleinstückgüter der gleichen Art benachbart zueinander gelagert werden, d. h. benachbarte Kleinstückgüter weisen regelmäßig unterschiedliche Formen und/oder Oberflächenbeschaffenheiten auf.

Zum Auslagern eines Kleinstückgutes wird dieses von einer Lagerfläche auf einen Ablagetisch des Greifers bewegt. Der Ablagetisch erstreckt sich in einer ersten horizontalen Richtung (X-Richtung) und einer zweiten horizontalen Richtung (Y-Richtung), orthogonal zur ersten horizontalen Richtung, und umfasst in X-Richtung eine Ein- und Auslagerungsstirnseite. Bei der Auslagerung wird ein Kleinstückgut beispielsweise mit zwei über dem Ablagetisch angeordneten langgestreckten, sich in X-Richtung erstreckenden und an einer Greifbackenhalterung befestigten Greifbacken über die Ein- und Auslagerungsstirnseite, d. h. in X-Richtung, auf den Auflagetisch bewegt. Dazu wird das Stückgut mit den beiden Greifbacken ergriffen indem zumindest eine der Greifbacken in Y-Richtung bewegt wird, wodurch das Kleinstückgut mit den Greifbacken eingeklemmt wird.

Zusätzlich kann es vorgesehen sein, dass zumindest eine der Greifbacken bei der Greifbackenhalterung schwenkbar gelagert ist, so dass Endabschnitte der Greifbacken aufeinander zu und voneinander weg bewegbar sind, so dass das Kleinstückgut mit den bei ihren Endabschnitten zusammengefahrenen Greifbacken über die Endabschnitte geklemmt wird. In Abhängigkeit von der Anordnung eines Kleinstückguts kann auch vorgesehen sein, dieses abschnittsweise zu hintergreifen. Eine ähnliche Vorgehensweise ergibt sich, wenn mehrere hintereinander auf einer Lagerfläche angeordnete Kleinstückgüter ausgelagert werden sollen. Ein solcher Greifer gemäß dem Oberbegriff des Anspruchs 1 ist z.B. in der WO 2019/015815 A1 bekannt.

Unabhängig davon, ob die Greifbacken lediglich in Y-Richtung zusammengefahren werden oder zumindest eine der Greifbacken verschwenkt wird, ist es mit den bekannten Greifern schwierig, sämtliche Kleinstückgüter gleichermaßen sicher zu bewegen, da diese regelmäßig unterschiedliche Formen und Oberflächenbeschaffenheiten aufweisen, welche für den Auslagerungsvorgang, wie er mit bekannten Greifern mit zwei Greifbacken ausgeführt wird, unterschiedlich gut geeignet sind. Soll beispielsweise ein schweres Kleinstückgut mit einer sehr glatten Oberfläche ausgelagert werden, kann es selbst dann schwierig sein, das Kleinstückgut sicher zu bewegen, wenn die Greifbacken vor dem Bewegen bei ihren Endabschnitten zusammengefahren (also verschwenkt) werden. Ferner ist es mit bekannten Greifern mit zwei Greifbacken ausgesprochen schwierig beziehungsweise nicht praktikabel, stehende Kleinstückgüter in Flaschenform auszulagern.

Es ist Aufgabe der vorliegenden Erfindung einen Greifer für ein Transportsystem einer Kommissioniervorrichtung bereitzustellen, mit welchem Kleinstückgüter mit unterschiedlichen Charakteristika (Form, Oberflächenbeschaffenheit, Gewicht) sicher ein- und ausgelagert werden können. Es ist ferner Aufgabe der Erfindung, ein entsprechendes Transportsystem bereitzustellen.

Die Aufgabe wird zum einen gelöst durch einen Greifer für ein Transportsystem einer Kommissioniervorrichtung mit horizontalen Lagerflächen zum Ein- und Auslagern von Kleinstückgütern unterschiedlicher Form und/oder Oberflächenbeschaffenheit nach Anspruch 1. Der erfindungsgemäße Greifer umfasst einen sich in einer ersten horizontalen Richtung (X-Richtung) und einer zweiten horizontalen Richtung (Y-Richtung), orthogonal zur ersten horizontalen Richtung, erstreckenden Ablagetisch mit zumindest einer Ein- und Auslagerungsstirnseite, zwei über dem Ablagetisch angeordnete langgestreckte, sich in X-Richtung erstreckende und an einer Greifbackenhalterung befestigte Greifbacken, wobei zumindest eine der Greifbacken in der Y-Richtung bewegbar ist und wobei zumindest eine der Greifbacken bei ihrem der Greifbackenhalterung abgewandten Endabschnitt ein Greifer-Kopplungsmittel aufweist. Der erfindungsgemäße Greifer umfasst ferner zumindest einen Transportaufsatz mit einem Aufsatz-Kopplungsmittel, wobei Greifer-Kopplungsmittel und Aufsatz-Kopplungsmittel derart miteinander wechselwirken, dass ein Transportaufsatz lösbar bei einem Endabschnitt einer Greifbacke fixiert ist.

Der erfindungsgemäße Greifer ist durch Bereitstellen der beiden zusammenwirkenden Kopplungsmittel in der Lage, eine Vielzahl von unterschiedlichen Transportaufsätzen zu verwenden, wobei die unterschiedlichen Transportaufsätze auf unterschiedliche Auslagerungsszenarien abgestellt sind. So ist es beispielsweise denkbar, bei einem Transportaufsatz (oder einem Paar von Transportaufsätzen, sofern beide Greifbacken ein Greifer-Kopplungsmittel umfassen) die Kontaktfläche(n) des beziehungsweise der Transportaufsatzes/-aufsätze mit einer kreissegmentförmigen Ausnehmung zu versehen, so dass beim Zusammenfahren der Greifbacken mit den entsprechend angepassten Transportaufsätzen ein Kleinstückgut in Form einer stehenden Flasche ideal gegriffen werden kann. Alternativ ist es denkbar, bei besonders empfindlichen Kleinstückgütern Transportaufsätze vorzusehen, die sehr großflächige Kontaktflächen aufweisen, so dass eine Beschädigung eines Kleinstückgutes vermieden werden kann. Darüber hinaus ist es denkbar, Transportaufsätze mit einer Kontaktfläche bereitzustellen, auf der mehrere beispielsweise gummiartige Fortsätze vorgesehen sind, die die Haftreibung zwischen Kleinstückgut und Transportaufsatz erhöhen.

Indem bei dem erfindungsgemäßen Greifer Kopplungsmittel an den Greifbacken selbst sowie bei Transportaufsätzen vorgesehen sind, ist es daher möglich, den Greifer speziell auf "problematische" Kleinstückgüter abzustimmen, so dass es mit dem erfindungsgemäßen Greifer möglich ist, auch solche Kleinstückgüter sicher beispielsweise von einer Lagerfläche auf den Ablagetisch zu bewegen, die mit einem üblichen Greifer, der nicht speziell auf die Kleinstückgüter abgestimmt werden kann, nicht oder nur mit einer großen Fehlerquote, oder unter Beschädigung des Kleinstückgutes ausgelagert werden können.

Die Erfindung kann bei Greifern verwendet werden, die die Kleinstückgüter über lediglich eine Ein- und Auslagerungsstirnseite ein- und auslagern, aber auch bei solchen, deren Ablagetisch zwei Ein- und Auslagerungsstirnseiten aufweist.

Bei dem erfindungsgemäßen Greifer ist ein Greifer-Kopplungsmittel als ein- und ausfahrbarer Vorsprung und das Aufsatz-Kopplungsmittel als korrespondierende Ausnehmung in einem Transportaufsatz ausgebildet. Eine entsprechende Ausgestaltung der Kopplungsmittel ist baulich recht einfach und bedingt wenig Mehraufwand bei der Herstellung des Greifers.

Erfindungsgemäß ist ein ein- und ausfahrbarer Vorsprung mit einem in dem Greifer angeordneten Antrieb bewegbar ausgestaltet sein. Zwar bedingt dies einen baulichen Mehraufwand bei dem Greifer, eine Lagereinrichtung für Transportaufsätze muss aber keine Mittel zum Lösen/Herstellen einer Wechselwirkung bereitstellen. Dies kann insbesondere dann sinnvoll sein, wenn man eine solche Lagereinrichtung einfach auf einer beliebigen Lagerfläche positioniert.

Die Aufgabe wird ferner gelöst durch ein Transportsystem für eine Kommissioniervorrichtung zum Ein- und Auslagern von Kleinstückgütern unterschiedlicher Form und/oder Oberflächenbeschaffenheit nach Anspruch 2.

Das erfindungsgemäße Transportsystem umfasst den vorstehend beschriebenen erfindungsgemäßen Greifer, eine Lagereinrichtung für eine Mehrzahl von Transportaufsätzen, wobei die Lagerung eine Mehrzahl von Lagerplätzen für diese Transportaufsätze aufweist, sowie eine Mehrzahl von Transportaufsätzen mit unterschiedlichen Kontaktflächen. Durch Kombination eines erfindungsgemäßen Greifers mit einer Lagereinrichtung, in welcher eine Mehrzahl von unterschiedlichen Transportaufsätzen bereitgestellt werden kann, ist es möglich, mit dem erfindungsgemäßen Transportsystem eine Vielzahl unterschiedlicher Kleinstückgüter unterschiedlicher Form und/oder Oberflächenbeschaffenheit beziehungsweise unterschiedlichen Gewichts ein- und auszulagern. Indem die Möglichkeit vorgesehen wird, dass der Greifer an das auszulagernde Kleinstückgut angepasst wird, und zwar durch Aufbringen eines beziehungsweise zweier abgestimmten/-r Transportaufsatzes/-aufsätze, können mit dem erfindungsgemäßen Transportsystem auch solche Kleinstückgüter bewegt werden, die mit einem üblichen Greifer nur schwer, gar nicht oder mit erheblicher Beschädigungsgefahr transportiert beziehungsweise bewegt werden können.

Zum Betreiben eines erfindungsgemäßen Transportsystems werden zunächst die Charakteristika eines zu transportierenden Kleinstückgutes (beispielsweise Form, Oberflächenbeschaffenheit oder Gewicht) dahingehend analysiert, welche Art beziehungsweise Arten von Transportaufsatz/-aufsätzen des Transportsystems zum Bewegen des Kleinstückgutes am besten geeignet ist beziehungsweise sind. Anschließend wird geprüft, ob bei zumindest einer der Greifbacken des Greifers ein solcher Soll-Transportaufsatz fixiert ist. Wenn dies nicht der Fall ist, wird zumindest ein aktuell an einer Greifbacke fixierter Ist-Transportaufsatz auf einem Lagerplatz der Lagereinrichtung abgesetzt und zumindest ein für ein Bewegen des Kleinstückgutes geeigneter Soll-Transportaufsatz an einer Greifbacke fixiert.

Wie genau analysiert wird, welcher Transportaufsatz zum Bewegen eines zu bewegenden Kleinstückgutes am besten geeignet ist, ist davon abhängig, welche Transportaufsätze das Transportsystem umfasst. Ferner ist es erheblich, welche Charakteristika eines zu transportierenden Kleinstückgutes bekannt sind und daher für die Analyse verwendet werden können. Wenn beispielsweise Form, Gewicht und Oberflächenbeschaffenheit bekannt sind, können jedem Transportaufsatz des Transportsystems verschiedene Wertebereiche der drei vorgenannten Parameter zugeordnet werden, und zum Transportieren eines Kleinstückgutes wird derjenige Transportaufsatz verwendet, dessen Parameterbereiche am weitestgehenden mit den Parametern eines zu transportierenden Kleinstückgutes übereinstimmen.

Das Absetzen eines nicht geeigneten Transportaufsatzes in der Lagereinrichtung wird durchgeführt, indem die Wechselwirkung zwischen Greifer-Kopplungsmittel und Aufsatz-Kopplungsmittel über den Greifer aufgehoben wird. Sobald diese Wechselwirkung aufgehoben wird, können die nun freien Greifbacken mit ihren Endabschnitten zu dem oder den Transportaufsatz bzw. -sätzen bewegt werden, der oder die bei der Analyse als der oder die bestgeeignete/-n ausgewählt wurde/-n. Sobald die Greifbacken in Position sind, wird die Wechselwirkung wiederhergestellt, und zwar über Mittel des Greifers beziehungsweise der Greifbacken. Zwar nimmt der Wechsel der Transportaufsätze eine gewisse Zeit in Anspruch, jedoch ist es bei Anwendung des erfindungsgemäßen Systems möglich, gegebenenfalls auch solche Kleinstückgüter zu bewegen, die mit üblichen Greifern, also solchen, die stets die gleiche Haptik bei den Endbereichen der Greifbacken aufweisen, schlichtweg nicht bewegt werden können. Die Flexibilität im Hinblick auf die Lagerung von unterschiedlichen Kleinstückgütern kann damit gegenüber bekannten Kommissioniervorrichtungen erheblich erhöht werden.

Bereits im Betrieb befindliche Kommissioniervorrichtungen können einfach an das neue Transportsystem und das erfindungsgemäße Verfahren angepasst werden, indem die Lagereinrichtung auf einer vorhandenen Lagerfläche fixiert wird und die Greifbacken des Greifers modifiziert werden. In Abhängigkeit von der genauen Ausgestaltung des Greifers und der Lagereinrichtung sind dazu nur geringe bauliche Änderungen an dem Greifer vorzunehmen.

Im Nachfolgenden wird eine bevorzugte Ausführungsform des erfindungsgemäßen Greifers und des Transportsystems sowie eines beispielhaften Verfahrens zum Betreiben des Transportsystems unter Bezugnahme auf die Zeichnung beschrieben, wobei
Figur 1 eine Schrägansicht einer Ausführungsform des erfindungsgemäßen Transportsystems zeigt,
Figuren 2a, 2b und 2c Detailansichten der Lagereinrichtung beziehungsweise von Transportaufsätzen des Transportsystems zeigen,
Figuren 3a und 3b Schrägansichten des erfindungsgemäßen Greifers zeigen, wobei Figur 3a eine Schrägansicht von oben und Figur 3b eine Schrägansicht von unten zeigt,
Figuren 4a und 4b Detailansichten der bevorzugten Ausführungsform des erfindungsgemäßen Greifers im Bereich der Ein- und Auslagerungsstirnseite zeigen,
Figur 5 eine Detailansicht der Bewegungsmechanik der Greifbacken zeigt,
Figuren 6a und 6b Detailansichten der Bewegungsmechanik der Greifbacken der bevorzugten Ausführungsform zeigen, wobei Figur 6a eine Draufsicht und Figur 6b eine Untersicht zeigt,
Figuren 7a - 7e schematisch einige unterschiedliche Ausgestaltungen des Greifer- sowie des Aufsatz-Kopplungsmittels zeigen, wobei lediglich die in Figur 7a gezeigte Ausgestaltung erfindungsgemäß ist, und
Figur 8 ein Ablaufschema eines Verfahrens zum Betreiben des Transportsystems zeigt.

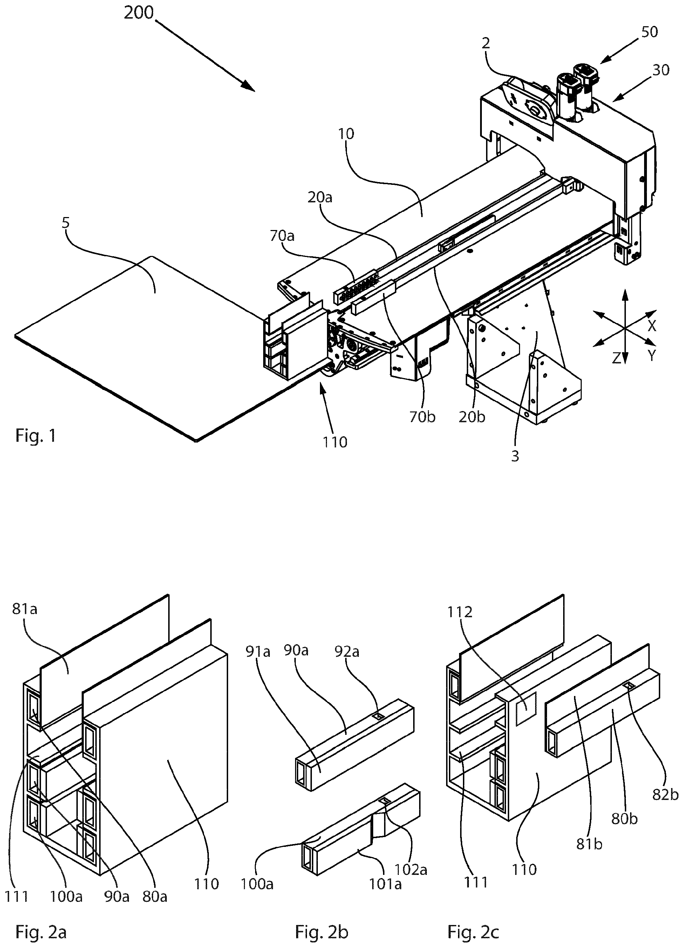

Figur 1 zeigt eine Schrägansicht einer bevorzugten Ausführungsform des erfindungsgemäßen Transportsystems 200. Dieses Transportsystem umfasst eine bevorzugte Ausführungsform des erfindungsgemäßen Greifers 1 sowie eine Lagereinrichtung 110, die auf einer Lagerfläche 5 angeordnet ist, die ansonsten zur Lagerung von Kleinstückgütern genutzt wird. Der Greifer umfasst einen sich in X- und Y-Richtung erstreckenden Ablagetisch 10 sowie zwei sich in X-Richtung erstreckende Greifbacken 20a, 20b, die bei ihren Endabschnitten jeweils einen Transportaufsatz 70a, 70b umfassen. Die Greifbacken selbst sind an einer Greifbackenführungsanordnung 30 befestigt, die in nachfolgenden Figuren detaillierter beschrieben wird. Auf der Greifbackenführungsanordnung 30 ist ein Sensor 2 angeordnet, mit welchem unterschiedliche Aspekte eines Ein- und Auslagerungsvorgangs überwacht werden können. Ferner ist auf der Greifbackenführungsanordnung 30 eine Antriebseinheit 50 angeordnet, die ebenfalls in nachfolgenden Figuren detaillierter beschrieben wird. Der Greifer 1 ist über einen Schwenkarm 3 an einer (nicht dargestellten) Führungseinrichtung befestigt, mit welcher der Greifer in Y- und Z-Richtung durch eine Kommissioniervorrichtung bewegt werden kann.

Figuren 2a - 2c zeigen Detailansichten der Lagereinrichtung 110 sowie von verschiedenen Transportaufsätzen 80a, 90a, 100a und 80b. Die Lagereinrichtung 110 ist eine Art simples "Hochlager", bei welchem bei unterschiedlichen Z-Positionen paarweise mehrere Lagerböden 111 vorgesehen sind. Bei der in Figur 2a gezeigten Ausführungsform der Lagereinrichtung 110 können vier Paare unterschiedlicher Transportaufsätze gelagert werden. Figur 2b zeigt zwei unterschiedliche Transportaufsätze 90a, 100a, welche auf den Endbereich der Greifbacke 20a fixierbar sind. Die in Figur 2b gezeigten Transportaufsätze umfassen ein Aufsatz-Kopplungsmittel, das bei beiden Transportaufsätzen als simple Ausnehmung 92a, 102a in der Oberseite des Transportaufsatzes ausgebildet ist. Jeder der beiden Transportaufsätze umfasst ein Kontaktmittel 91a, 101a, wobei das Kontaktmittel 101a des Transportaufsatzes 100a eine Einkerbung aufweist. Ein solches Kontaktmittel kann beispielsweise verwendet werden, wenn bei dem auszulagernden Stückgut ein entsprechender Vorsprung an der Außenseite vorgesehen ist, welcher in Kontakt mit dem Transportaufsatz kommt. In Figur 2c ist eine weitere Ausführungsform der Lagereinrichtung gezeigt, wobei bei dieser Ausführungsform ein Mittel 112 zum Lösen/Herstellen einer Wechselwirkung zwischen Greifer-Kopplungsmittel und Aufsatz-Kopplungsmittel vorgesehen ist. Wie genau das Mittel aufgebaut ist und die Wechselwirkung zwischen Greifer-Kopplungsmittel und Aufsatz-Kopplungsmittel löst bzw. herstellt, ist abhängig davon, wie genau das Greifer-Kopplungsmittel und das Aufsatz-Kopplungsmittel ausgebildet sind. Beispielsweise ist es denkbar (aber nicht dargestellt), dass das Mittel zum Lösen der Wechselwirkung eine ausfahrbare Nase aufweist, die in eine Ausnehmung des Transportaufsatzes und der Greifbacke eingreift und das Greifer-Kopplungsmittel, welches in diesem Fall ebenfalls als bewegbare Nase ausgebildet sein müsste, in der Z-Achse zum Lösen und gegebenenfalls Wiederherstellen einer Wechselwirkung bewegt. In Figur 2c ist ferner eine weitere Variante eines Transportaufsatzes 80b veranschaulicht, bei welchem das Aufsatz-Kopplungsmittel wiederum als einfache Ausnehmung 82b ausgebildet ist. Das Kontaktmittel 81b ist bei diesem Transportaufsatz besonders großflächig ausgebildet, um einen besonders sanften Transport eines Kleinstückgutes zu gewährleisten.

Die genaue Ausgestaltung der Kontaktmittel ist abhängig davon, welche Art von Kleinstückgütern bewegt werden soll. Je größer die Anzahl der unterschiedlichen Arten von Kleinstückgütern, desto größer sollte die Anzahl der unterschiedlichen Transportaufsätze sein. Dementsprechend muss auch die Größe der Lagereinrichtung angepasst werden, alternativ können auch mehrere Lagereinrichtungen auf einer Lagerfläche 5 vorgesehen sein.

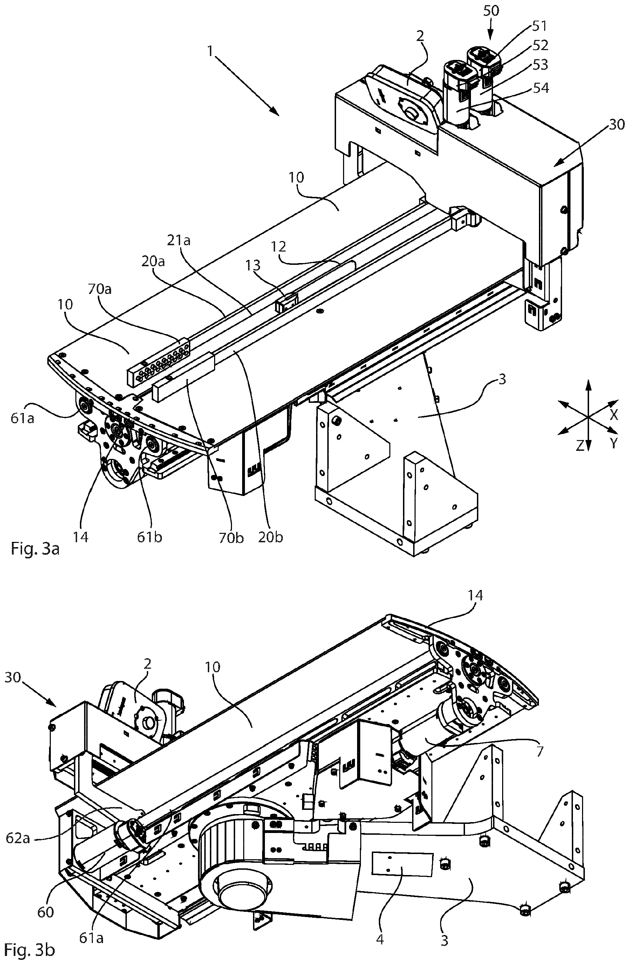

Figuren 3a und 3b zeigen zwei Schrägansichten einer bevorzugten Ausführungsform des erfindungsgemäßen Greifers 1, wobei Figur 3a eine Schrägansicht von oben und Figur 3b eine Schrägansicht von unten zeigt. Der erfindungsgemäße Greifer 1 ist Teil eines (nicht dargestellten) Bediengerätes für eine Kommissioniervorrichtung und umfasst einen Ablagetisch 10 sowie zwei Greifbacken 20a, 20b mit gegenüberliegenden Greifflächen 21a, 21b. Bei ihren freien Enden weisen die Greifbacken 20a, 20b bei der hier gezeigten Ausführungsform des Greifers jeweils einen Transportaufsatz 70a bzw. 70b auf. Bei den freien Enden der Greifbacken weist der Ablagetisch 10 eine Ein- und Auslagerungsstirnseite 14 auf.

Der Ablagetisch umfasst mittig eine langgestreckte Öffnung, die sich in Ein- und Auslagerungsrichtung, d. h. in der ersten horizontalen Richtung X, erstreckt. In der Öffnung ist ein Schiebeelement 12 mit einem verbreiterten Schiebekopf 13 angeordnet. Das Schiebeelement 12 kann in der langgestreckten Öffnung in Ein- und Auslagerungsrichtung bzw. der ersten horizontalen Richtung bewegt werden.

Gegenüber der Ein- und Auslagerungsstirnseite 14 ist bei der gezeigten Ausführungsform eine Greifbackenführungsanordnung 30 angeordnet, mit welcher die Greifbacken 20a, 20b verbunden sind und welche eine Mechanik zum Verfahren und Verschwenken der Greifbacken umfasst. Im oberen Abschnitt umfasst die Greifbackenführungsanordnung 30 eine Antriebseinheit 50 mit zwei Antrieben 51, 52 sowie zugeordneten Getrieben 53, 54. Über diese beiden Antriebe werden bei der gezeigten Ausführungsform die Greifbacken verfahren und geschwenkt, wie dies unter Bezugnahme auf nachfolgende Figuren detaillierter beschrieben wird. Auf der Greifbackenführungsanordnung ist eine optische Erfassungseinrichtung 2 angeordnet, mit welcher bei dem Ein- und Auslagerungsvorgang verschiedene Aspekte überwacht werden können.

Die Greifbackenführungsanordnung 30 sowie sämtliche ihrer elektronischen Bauteile sind mit einer Steuereinrichtung 4 verbunden, die bei der gezeigten Ausführungsform unterhalb eines Befestigungsarmes 3 angeordnet ist. Der Befestigungsarm 3 selbst ist an dem Ablagetisch bzw. an einem Unterbau des Ablagetisches über ein Drehgelenk befestigt.

Zur Ein- und Auslagerung von Kleinstückgütern muss die Greifbackenführungsanordnung 30 in der ersten horizontalen Richtung (X-Richtung) bzw. der Ein- und Auslagerungsrichtung bewegt werden. Dazu ist bei der gezeigten Ausführungsform unterhalb des Ablagetisches ein Antrieb 60 angeordnet. Dieser ist über ein Getriebe mit einem Linearantrieb 61a, 62a gekoppelt, mittels welchem die Greifbackenführungsanordnung in X-Richtung bewegt wird. Unter dem Ablagetisch ist ferner ein Antrieb 7 angeordnet, welcher das Schiebeelement 12 antreibt.

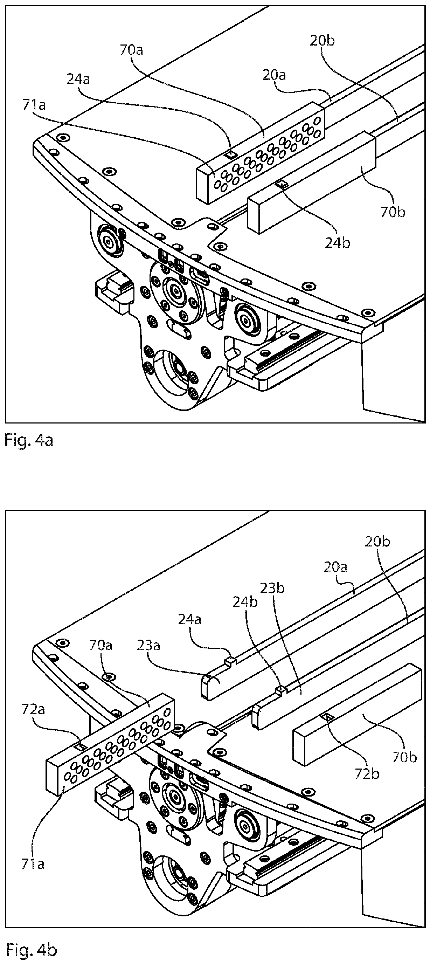

Figuren 4a und 4b zeigen Detailansichten der bevorzugten Ausführungsform des erfindungsgemäßen Greifers im Bereich der Ein- und Auslagerungsstirnseite. In Figuren 4a und 4b ist detaillierter zu sehen, dass und wie die Transportaufsätze 70a, 70b bei Endabschnitten 23a, 23b der Greifbacken 20a, 20b angeordnet werden können. Die bei dieser Ausführungsform verwendeten Transportaufsätze 70a, 70b umfassen jeweils ein Kontaktmittel (gezeigt nur 71a), die eine Mehrzahl von Vorsprüngen aufweisen, die die Haftreibung zwischen Transportaufsatz (und damit Greifbacke) und Kleinstückgut erhöhen. Auch bei dieser Variante der Transportaufsätze ist das Aufsatz-Kopplungsmittel als einfache Ausnehmung 72a, 72b in der Oberseite des Transportaufsatzes ausgebildet. Das Greifer-Kopplungsmittel ist als simpler ein- und ausfahrbarer Vorsprung 24a, 24b ausgebildet. Ob das Lösen der Wechselwirkung zwischen Greifer-Kopplungsmittel und Aufsatz-Kopplungsmittel über die Greifbacken oder eine Lagereinrichtung stattfindet, ist in den Figuren 4a und 4b nicht näher erläutert. In den Figuren 4a, 4b ist aber insbesondere zu erkennen, dass die in Figuren 4a und 4b (und allen vorherigen Figuren) gezeigten Transportaufsätze die Endbereiche 23a, 23b der Greifbacken vollumfänglich umfassen. Eine solche Ausgestaltung der Transportaufsätze ist jedoch nicht zwingend erforderlich. Wesentlich ist, dass die Transportaufsätze über die Kombination Greifer-Kopplungsmittel und Aufsatz-Kopplungsmittel lösbar bei den Endabschnitten der Greifbacken fixierbar sind. Alternativ wäre es auch denkbar, dass beispielsweise bei der Rückseite der Kontaktmittel Aufsatz-Kontaktmittel in Form eines ferromagnetischen Mittels vorgesehen sind, die mit einem Greifer-Kopplungsmittel in Form eines Elektromagneten zusammenwirken. Aus Vorgesagtem wird deutlich, dass die Wahl des Begriffes Transportaufsatz nicht suggerieren soll, dass dieser zwangsläufig auf einem Abschnitt des Endbereichs einer Greifbacke aufliegt beziehungsweise aufsitzt.

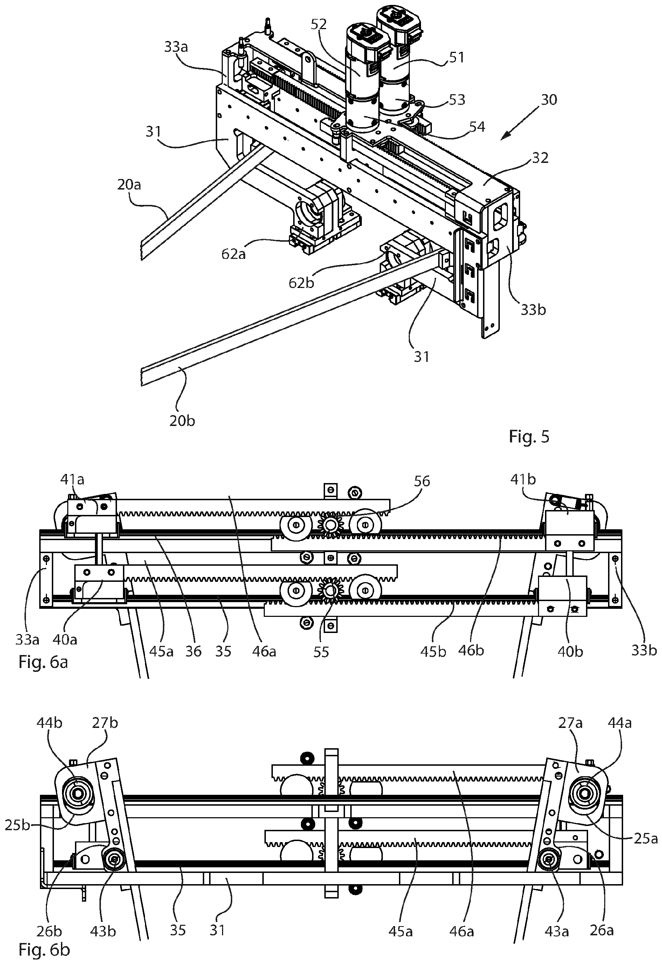

Figur 5 zeigt eine Schrägansicht der Greifbackenführungsanordnung 30 der bevorzugten Ausführungsform des Greifers, bei welcher beide Greifbacken 20a, 20b zum Greifen geschwenkt sind. Die Greifbackenführungsanordnung 30 umfasst eine Rahmenstruktur 31, 32, 33a, 33b, wobei das vordere Bauteil 31 die Greifbacken (und den nicht dargestellten Ablagetisch) umgreift. Bei den unteren Enden des Bauteiles 31 sind bewegliche Teile 62a, 62b (die "Läufer") eines Linearantriebes befestigt, mit welchen die Greifbackenführungsanordnung 30 in der ersten horizontalen Richtung bewegt werden kann. Die Bauteile werden als "beweglich" bezeichnet, da sie sich zusammen mit der Greifbackenführungsanordnung entlang entsprechender feststehender Teile (die zum Bewegen der beweglichen Teile gedreht werden) in der ersten horizontalen Richtung bewegen. Die feststehenden Teile 61a, 61b (siehe Figuren 3a, 3b) selbst können sich zum Bewegen der beweglichen Teile ebenfalls bewegen, beispielweise indem sie sich drehen, wobei bei dieser Drehbewegung die beweglichen Teile entlang der Längsachse der feststehenden Teile bewegt werden, die unbeweglichen Teile aber bezogen auf die Position im Greifer ortsfest sind. Bei einer alternativen Ausführungsform ist es beispielsweise denkbar, dass die feststehenden Teile als Zahnriemen ausgebildet sind, die zwischen den Längsenden des Greifers ausgebildet sind und mit entsprechenden Umlenkrollen zum Bewegen der beweglichen Teile zusammenwirken.

Wie es Figur 6a zu entnehmen ist, erstrecken sich zwischen den seitlichen Rahmenstrukturbauteilen 33a, 33b in einer zweiten horizontalen Richtung Y parallel zueinander und in der ersten horizontalen Richtung X beabstandet voneinander zwei Führungen 35, 36, eine erste Führung 35 und eine zweite Führung 36, wobei die erste Führung den freien Enden der Greifbacken zugewandt ist. An jeder der Führungen 35, 36 sind zwei Greifbackenschlitten 40a, 40b; 41a, 41b angeordnet; zwei erste Greifbackenschlitten 40a, 40b an der ersten Führung 35, zwei zweite Greifbackenschlitten 41a, 41b an der zweiten Führung 36. Bei der dargestellten Ausführungsform des erfindungsgemäßen Greifers umgreift ein Abschnitt der Greifbackenschlitten einen Vorsprung der Führungen 35, 36, so dass die Greifbackenschlitten auf diesem Vorsprung teilweise aufliegen.

In den Figuren 6a und 6b ist zu erkennen, dass die Greifbackenschlitten 40a, 40b; 41a, 41b mit Antriebselementen 45a, 45b; 46a, 46b verbunden sind, die bei der gezeigten Ausführungsform als Zahnstangen ausgebildet sind. Die der ersten Führung 35 bzw. den entsprechenden ersten Greifbackenschlitten 40a, 40b zugeordneten Antriebselemente 45a, 45b sowie die entsprechenden der zweiten Führung 36 zugeordneten Antriebselemente 46a, 46b sind bezogen auf die Zahnelemente der Zahnstangen derart ausgerichtet, dass sich die Zahnelemente gegenüberliegen und bei ihren freien Enden einen Überlappungsbereich bilden. Mittig in dem Überlappungsbereich der Antriebselemente bzw. Zahnstangen ist jeweils ein Antriebszahnrad 55, 56 angeordnet, welches über ein (in den Figuren 6a und 6b nicht dargestelltes) Getriebe 53, 54 mit einem Antrieb 51, 52 gekoppelt ist. Der Abstand zwischen den Greifbackenschlitten 40a, 40b; 41a, 41b einer Führung und dem entsprechenden Antriebszahnrad ist identisch, ein Antriebszahnrad ist also genau mittig zwischen zwei Greifbackenschlitten angeordnet, so dass eine Bewegung des Antriebszahnrades synchrone Bewegungen der Greifbackenschlitten bewirkt. Bei einer Drehung des Antriebszahnrades werden die Greifbackenschlitten also synchron aufeinander zu oder voneinander weg bewegt, wobei entsprechendes für die den beiden Führungen 35, 36 zugeordneten Greifbackenschlitten gilt.

Die Greifbackenschlitten der ersten Führung können also simultan oder getrennt hinsichtlich der Greifbackenschlitten der zweiten Führung bewegt werden, so dass eine große Flexibilität hinsichtlich der Bewegung der Greifbackenschlitten besteht. Die Greifbackenschlitten der ersten bzw. zweiten Führung können synchron bewegt werden, oder es können nur die der ersten oder der zweiten Führung zugeordneten Greifbackenschlitten bewegt werden. Auf diese Weise ist es möglich, die an den Greifbackenschlitten befestigten Greifbacken parallel oder bereits geschwenkt simultan ohne Winkelverstellung zu verfahren (indem die Greifbackenschlitten beider Führungen simultan bewegt werden), oder, wenn lediglich die Greifbackenschlitten einer Führung bewegt werden, die Greifbacken zu schwenken.

Wie bereits ausgeführt, sind die Greifbacken 20a, 20b mit der Greifbackenführungsanordnung 30 gekoppelt. Diese Kopplung ist in Figur 6b zu erkennen. Bei der gezeigten Ausführungsform sind die Greifbacken 20a, 20b jeweils über ein Drehgelenk 26a, 43a; 26b, 43b mit den Greifbackenschlitten 40a, 40b der ersten Führung 35 und über eine Langlochführung 27a, 25a, 44a; 27b, 25b, 44b mit den Greifbackenschlitten 41a, 41b der zweiten Führung 36 verbunden. Bei alternativen Ausführungsformen kann das Drehgelenk auch bei den der zweiten Führung zugeordneten Greifbackenschlitten angeordnet sein, in diesem Fall ist es dann bei der dargestellten Kombination erforderlich, dass die Langlochführungen bei den der ersten Führung 35 zugeordneten Greifbackenschlitten angeordnet sind.

Eine Verwendung der Kombination Drehgelenk/Langlochführung ist jedoch nicht zwingend. Zwar müssen die Greifbacken bei zumindest einer Führung mittels eines Dreh- bzw. Schwenkgelenkes an den entsprechenden Greifbackenschlitten gehalten sein, die Verwendung einer Langlochführung ist jedoch nicht zwingend erforderlich. So ist es beispielsweise denkbar, dass die Greifbacken bei einer alternativen Ausführungsform mit den Greifbackenschlitten gegen eine Rückstellkraft bewegt werden, und bei einem Rückfahren der Greifbackenschlitten die Rückstellkraft die Greifbacken zurückbewegt.

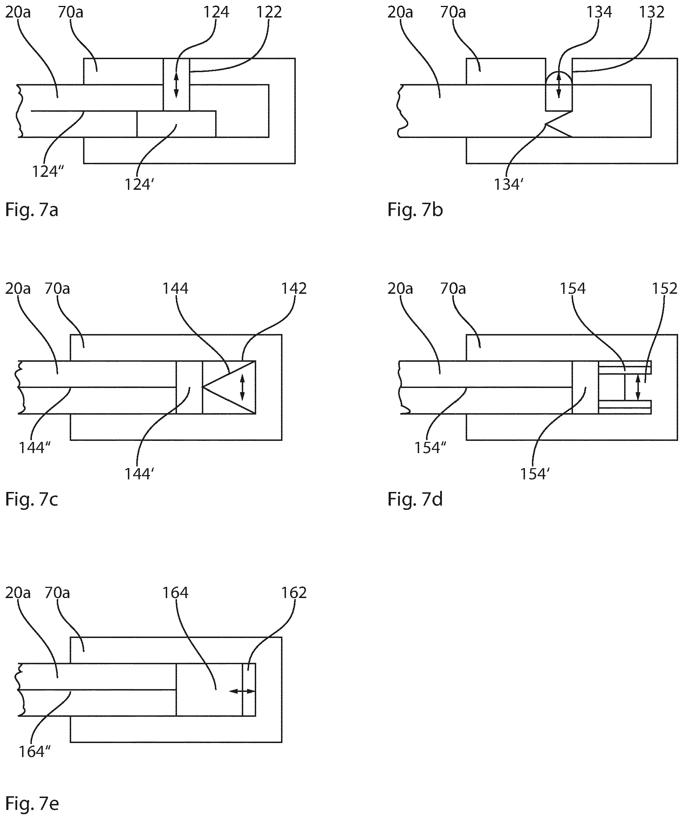

Figuren 7a - 7e veranschaulichen schematisch verschiedene Möglichkeiten der Ausgestaltung der Kombination Greifer-Kopplungsmittel/Aufsatz-Kopplungsmittel. Bei der erfindungsgemäßen Ausführungsform nach Figur 7a ist das Kopplungsmittel als vertikal verfahrbarer Vorsprung 124 ausgebildet, der mit einem Antrieb 124' gekoppelt ist, welcher wiederum über eine Leitung 124" mit einer (nicht dargestellten) Steuereinrichtung verbunden ist. Das korrespondierende Aufsatz-Kopplungsmittel ist als eine simple Ausnehmung 122 in dem Transportaufsatz 70a ausgebildet. Zum Lösen der Wechselwirkung zwischen Greifer- und Aufsatz-Kopplungsmittel wird der Vorsprung 124 über den Antrieb 124' nach unten bewegt. Um die Wechselwirkung wiederherzustellen, wird der Vorsprung nach oben ausgefahren.

Bei der in Figur 7b gezeigten, nicht erfindungsgemäßen Variante ist das Greifer-Kopplungsmittel ebenfalls als bewegbarer Vorsprung 134 ausgebildet, der jedoch mit einer Feder 134' in die Wechselwirk-Stellung gedrängt ist, in welcher der Aufsatz 70a an der Greifbacke 20a befestigt ist. Durch Wahl einer entsprechenden Oberflächenkontur des Vorsprungs 134 ist dieser derart gestaltet, dass bei Aufbringung einer entsprechenden Kraft dieser gegen die Feder 134' nach unten bewegt wird. Diese Kraft ist selbstverständlich so zu wählen, dass sich der Aufsatz nur gewollt von der Greifbacke löst.

Bei der in Figur 7c gezeigten, nicht erfindungsgemäßen Variante ist das Greifer-Kopplungsmittel als Spannmittel 144 ausgebildet, das Aufsatz-Kopplungsmittel wird schlicht von der Ober- und Unterseite des Transportaufsatzes bereitgestellt. Indem das Spannmittel 144 geöffnet wird, verspannt sich dieses gegen die Ober- und Unterseite des Transportaufsatzes, so dass der Transportaufsatz auf der Greifbacke fixiert ist. Alternativ wäre es denkbar, dass das Spannmittel gegebenenfalls in Öffnungen des Transportaufsatzes eingreift. Das Spannmittel 144 wird durch einen entsprechenden Antrieb 144' betätigt, der über eine Leitung 144" mit einer (nicht gezeigten) Steuereinrichtung gekoppelt ist.

Bei der in Figur 7d gezeigten, nicht erfindungsgemäßen Alternative ist das Greifer-Kopplungsmittel als Greifmittel 154 ausgebildet, das ein als Vorsprung beziehungsweise Anker 152 ausgebildetes Aufsatz-Kopplungsmittel zum Herstellen der Wechselwirkung zwischen Transportaufsatz und Greifbacke umgreift. Das Greifmittel selbst ist über einen Antrieb 154' beweglich, welcher wiederum über eine Leitung 154" mit einer (nicht dargestellten) Steuereinrichtung gekoppelt ist.

In der in Figur 7e gezeigten, nicht erfindungsgemäßen Variante wird die Wechselwirkung zwischen Transportaufsatz und Greifbacke über ein als Elektromagnet 164 (mit Leitung 164") ausgebildetes Greifer-Kopplungsmittel und ein als zumindest teilweise ferromagnetisches Gegenmittel 162 ausgebildetes Aufsatz-Kopplungsmittel bereitgestellt.

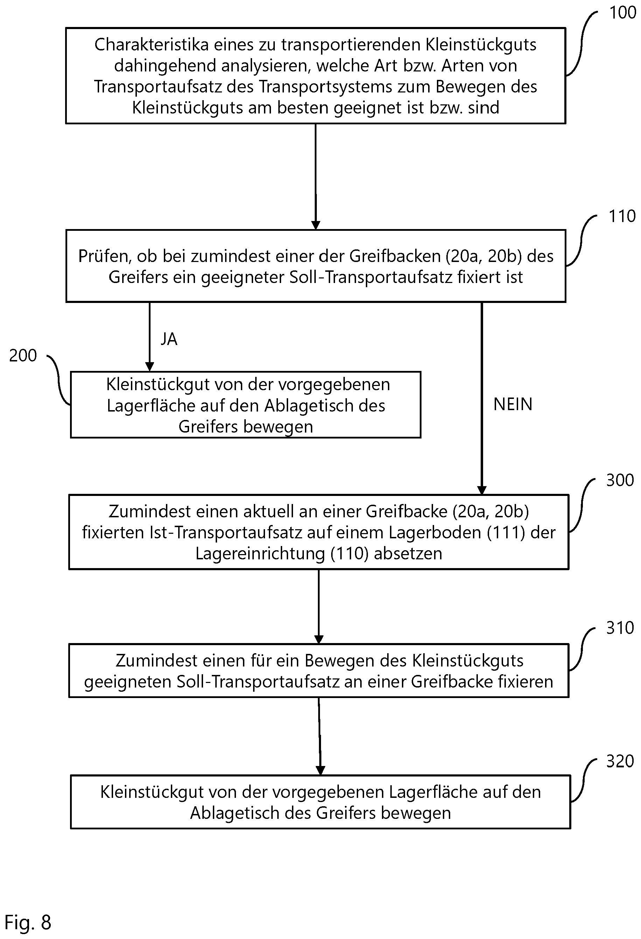

Figur 8 zeigt ein Ablaufschema eines Verfahrens zum Betreiben des Transportsystems. Sobald ein Kleinstückgut z. B. ausgelagert werden soll (entsprechendes kann auch gelten, wenn ein Kleinstückgut von einem Bereitstellungsort (beispielsweise einem Einlagerungsband) auf eine Lagerfläche bewegt werden soll), werden in einem Schritt 100 bekannte Charakteristika des zu transportierenden Kleinstückguts dahingehend analysiert, welche Art bzw. Arten von Transportaufsatz/-aufsätzen des Transportsystems zum Bewegen des Kleinstückguts am besten geeignet ist bzw. sind. Wenn dies bekannt ist, wird in einem Schritt 110 geprüft, ob bei zumindest einer der Greifbacken des Greifers ein geeigneter Soll-Transportaufsatz fixiert ist. Sollte dies der Fall sein, wird in einem Schritt 200 das Kleinstückgut von der Lagerfläche auf den Ablagetisch des Greifers bewegt. Wenn dies aber nicht der Fall ist, wird in einem Schritt 300 zumindest ein aktuell an einer Greifbacke fixierter Ist-Transportaufsatz auf einem Lagerboden der Lagereinrichtung abgesetzt und in einem nachfolgenden Schritt 310 zumindest ein für ein Bewegen des Kleinstückguts geeigneter Soll-Transportaufsatz an einer Greifbacke fixiert. Dazu wird der Greifer zu dem oder den geeigneten Transportaufsatz bzw. - aufsätzen bewegt und die Wechselwirkung zwischen den Kopplungsmitteln hergestellt und so ein Transportaufsatz an einer Greifbacke fixiert. Anschließend wird in einem Schritt 320 das Kleinstückgut von der vorgegebenen Lagerfläche auf den Ablagetisch des Greifers bewegt.

## Patentansprüche

1. Greifer (1) für ein Transportsystem (200) einer Kommissioniervorrichtung mit horizontalen Lagerflächen (5) zum Ein- und Auslagern von Kleinstückgütern unterschiedlicher Form oder Oberflächenbeschaffenheit, aufweisend:
einen sich in einer ersten horizontalen Richtung (X-Richtung) und einer zweiten horizontalen Richtung (Y-Richtung), orthogonal zur ersten horizontalen Richtung, erstreckenden Ablagetisch (10) mit zumindest einer Ein- und Auslagerungsstirnseite (14),
zwei über dem Ablagetisch (10) angeordnete langgestreckte, sich in X-Richtung erstreckende und an einer Greifbackenführungsanordnung (30) befestigte Greifbacken (20a, 20b), wobei zumindest eine der Greifbacken in der Y-Richtung bewegbar ist
**dadurch gekennzeichnet, dass**
zumindest eine der Greifbacken bei ihrem der Greifbackenführungsanordnung abgewandten Endabschnitt (23a, 23b) ein Greifer-Kopplungsmittel (24a, 24b) aufweist, und
zumindest einen Transportaufsatz (70a, 70b) mit einem Aufsatz-Kopplungsmittel (72a, 72b), wobei Greifer-Kopplungsmittel und Aufsatz-Kopplungsmittel derart miteinander wechselwirken, dass der Transportaufsatz lösbar bei einem Endabschnitt einer Greifbacke fixiert ist, wobei
das Greifer-Kopplungsmittel als ein- und ausfahrbarer Vorsprung (124) und das Aufsatz-Kopplungsmittel als korrespondiere Ausnehmung (122) in einem Transportaufsatz (70a) ausgebildet ist,
wobei der ein- und ausfahrbarer Vorsprung (124) mit einem in dem Greifer angeordneten Antrieb (124') bewegbar ist.

2. Transportsystem (200) für eine Kommissioniervorrichtung zum Ein- und Auslagern von Kleinstückgütern unterschiedlicher Form oder Oberflächenbeschaffenheit, aufweisend:
einen Greifer (1) nach Anspruch 1,
eine Lagereinrichtung (110) für eine Mehrzahl von Transportaufsätzen (70a, 70b; 80a, 80b; 90a, 90b; 100a, 100b), wobei die Lagereinrichtung eine Mehrzahl von Lagerböden (111) für Transportaufsätze aufweist, sowie
eine Mehrzahl von Transportaufsätzen (70a, 70b; 80a, 80b; 90a, 90b; 100a, 100b) mit unterschiedlichen Kontaktflächen (71a; 101a) .

## Claims

1. Gripper (1) for a transport system (200) of a picking device having horizontal storage surfaces (5) for storing and dispensing small piece goods of different shapes and/or surface properties, comprising:
a drop table (10) extending in a first horizontal direction (X direction) and a second horizontal direction (Y direction) which is orthogonal to the first horizontal direction, having at least one storage and dispensing end face (14),
two elongated gripping jaws (20a, 20b) which are arranged above the drop table (10) and extend in the X direction and are fastened to a gripping jaw guide arrangement (30), wherein at least one of the gripping jaws is movable in the Y direction **characterized in that**
at least one of the gripping jaws has a gripper coupling means (24a, 24b) at its end portion (23a, 23b) facing away from the gripping jaw guide arrangement, and
at least one transport attachment (70a, 70b) with an attachment coupling means (72a, 72b), wherein the gripper coupling means and the attachment coupling means interact with one another in such a way that the transport attachment is releasably fixed at an end portion of a gripping jaw, wherein
the gripper coupling means is designed as a retractable and extendable projection (124) and the attachment coupling means is designed as a corresponding recess (122) in a transport attachment (70a), wherein
the retractable and extendable projection (124) is movable by means of a drive (124') arranged in the gripper.

2. Transport system (200) for a picking device for storing and dispensing small piece goods of various shapes or surface properties, comprising:
a gripper (1) according to claim 1,
a storage device (110) for a plurality of transport attachments (70a, 70b; 80a, 80b; 90a, 90b; 100a, 100b), the storage device having a plurality of storage floors (111) for transport attachments, and
a plurality of transport attachments (70a, 70b; 80a, 80b; 90a, 90b; 100a, 100b) with different contact surfaces (71a; 101a).

## Revendications

1. Préhenseur (1) pour un système de transport (200) d'un dispositif de préparation de commandes avec des surfaces de stockage horizontales (5) pour le stockage et le déstockage de petites marchandises de forme ou de nature de surface différentes, présentant :
une table de dépôt (10) s'étendant dans une première direction horizontale (direction X) et dans une deuxième direction horizontale (direction Y), orthogonale à la première direction horizontale, avec au moins une face frontale de stockage et de déstockage (14),
deux mâchoires de préhension (20a, 20b) allongées, disposées au-dessus de la table de dépôt (10), s'étendant dans la direction X et fixées à un dispositif de guidage de mâchoires de préhension (30), au moins une des mâchoires de préhension étant mobile dans la direction Y
**caractérisé en ce que** au moins l'une des mâchoires de préhension présente, à sa section d'extrémité (23a, 23b) opposée à l'agencement de guidage de mâchoires de préhension, un moyen de couplage de préhenseur (24a, 24b), et
au moins un accessoire de transport (70a, 70b) avec un moyen d'accouplement d'accessoire (72a, 72b), le moyen de couplage de préhenseur et le moyen d'accouplement d'accessoire interagissant de telle sorte que l'accessoire de transport est fixée de manière amovible à une section d'extrémité d'une mâchoire de préhension, où
le moyen de couplage du préhenseur est formé comme une saillie (124) pouvant être rentrée et sortie et le moyen d'accouplement d'accessoire est formé comme un évidement correspondant (122) dans un accessoire de transport (70a),
la saillie (124) pouvant être rentrée et sortie pouvant être déplacée avec un entraînement (124') disposé dans le préhenseur.

2. Système de transport (200) pour un dispositif de préparation de commandes pour le stockage et le déstockage de petites marchandises de forme ou de nature de surface différentes, présentant :
un préhenseur (1) selon la revendication 1,
un dispositif de stockage (110) pour une pluralité d'accessoire de transport (70a, 70b ; 80a, 80b ; 90a, 90b ; 100a, 100b), le dispositif de stockage présentant une pluralité de fonds de stockage (111) pour les accessoires de transport, ainsi que
une pluralité d'accessoire de transport (70a, 70b ; 80a, 80b ; 90a, 90b ; 100a, 100b) avec différentes surfaces de contact (71a ; 101a).
